# EUROPEAN PATENT APPLICATION

(11) **EP 1 879 380 A1**
(43) Date of publication of application: **16.01.2008**
(21) Application number: 07106815.9
(22) Date of filing: 24.04.2007
(51) Int. Cl.: H04N 5/445

(54) **Display apparatus, control method of display apparatus and signal processing apparatus using the same**

(30) Priority: 12.07.2006 KR 20060065561
(71) Applicant: Samsung Electronics Co., Ltd., Suwon-si 442-742 Gyeonggi-do (KR)
(72) Inventor: Kim, Da-rae, Gyeonggi-do (KR)
(74) Representative: Brandon, Paul Laurence

(57) **Abstract**

A display apparatus includes a signal processor which processes a video signal having additional information corresponding to a video content. A display part displays a video of the video signal processed by the signal processor. A controller calculates a notice value corresponding to a video-displaying time based on the additional information, and displays the calculated notice value on the display part. Thus, the present invention provides a display apparatus which displays a user with necessary information corresponding to additional information and video-displaying time by using a video signal having additional information corresponding to a video content when the user views a video, a control method of a display apparatus and a signal processing apparatus using the same.

## Description

Generally, a display apparatus such as a TV receives and processes a video signal having a predetermined video from a broadcasting station or an external device which is connected thereto to display the video signal. Such a display apparatus is used for various purposes including watching TV programs.

Currently, many people are regularly working out in a gym or home for their health. When people exercise at home, they are increasingly using videos to exercise. These videos may be fitness programs, yoga programs and dance programs, among others.

The conventional display apparatus displays videos only, and does not have a function of notifying a user how many calories are consumed during the exercise. Thus, when a user exercises while viewing such videos, a user may not know the consumed calories and the effect of the exercise.

Accordingly, there is a need for a display apparatus that can display additional information such as consumed calories along with a video program.

Accordingly, it is an aim of preferred embodiments of the present invention to provide a display apparatus which displays a user with necessary information corresponding to additional information and video-display time by using a video signal having additional information corresponding to a video content when the user views a video, a control method of a display apparatus and a signal processing apparatus using the same.

Additional aspects of exemplary embodiments of the present invention will be set forth in part in the description which follows and, in part, will be obvious from the description, or may be learned by practice of the present invention.

According to a first aspect of the present invention there is provided a display apparatus, comprising a signal processor which processes a video signal having additional information corresponding to a video content. A display part displays a video of the video signal processed by the signal processor. A controller calculates a notice value corresponding to a video-displaying time based on the additional information, and displays the calculated notice value on the display part.

Suitably, the display apparatus further comprises a storage part which stores the video signal. The controller stores the inputted video signal in the storage part when the video signal having the additional information corresponding to the video content is inputted.

Suitably, the video content comprises a weight loss, and the additional information comprises a calorie consumption per hour.

The controller calculates the notice value by multiplying the video-displaying time by the calorie consumption per hour.

Suitably, the controller calculates the notice value corresponding to a time from when the video is selected to be displayed to when the video is selected to be stopped displaying.

Suitably, the controller collects time information on the video-displaying times for a predetermined period, and calculates a periodic notice value based on the collected time information.

The controller displays the calculated notice value by period as at least one of monthly, weekly and daily notice values.

According to a second aspect of the present invention there is provided a method of controlling a display apparatus. The method preferably includes processing a video signal having additional information corresponding to a video content and displaying a video. A notice value corresponding to a video displaying time is calculated based on the additional information. The calculated notice value is displayed on a display part.

Suitably, the method further comprises storing the inputted video signal when the video signal having the additional information corresponding to the video content is inputted.

Suitably, the video content comprises an exercise video, and the additional information comprises a calorie consumption per hour.

Suitably, the calculating the notice value comprises calculating the notice value by multiplying the video-displaying time by the calorie consumption per hour.

The notice value is calculated corresponding to a time from when the video is selected to be displayed to when the video is selected to be stopped displaying.

The method further comprises collecting time information on the video-displaying times for a predetermined period; and calculating a periodic notice value based on the collected time information.

The calculated periodic notice value is displayed by period as at least one of monthly, weekly and daily notice values.

According to a third aspect of the present invention there is provided a signal processing apparatus, comprising a signal processor which processes a video signal having additional information corresponding to a video content. A controller calculates a notice value corresponding to a video-displaying time based on the additional information, and displays the calculated notice value on a predetermined display apparatus.

Suitably, the signal processing apparatus further comprises a storage part which stores a video signal therein. The controller stores the inputted video signal in the storage part when the video signal having the additional information corresponding to the video content is inputted.

The video content comprises an exercise video, and the additional information comprises a calorie consumption per hour.

The controller calculates the notice value by multiplying the video-displaying time by the calorie consumption per hour.

The controller calculates the notice value corresponding to a time from when the video is selected to be displayed to when the video is selected to be stopped displaying.

The controller collects time information on the video-displaying times for a predetermined period, and calculates a periodic notice value based on the collected time information.

The controller displays the calculated notice value by period as at least one of monthly, weekly and daily notice values.

The present invention will become apparent and more readily appreciated from the following description of exemplary embodiments, taken in conjunction with the accompanying drawings of which:
FIG. 1 is a control block diagram of a display apparatus according to an exemplary embodiment of the present invention;
FIG. 2 is a control flowchart of a display apparatus according to a first exemplary embodiment of the present invention; and
FIG. 3 is a control flowchart of a display apparatus according to a second exemplary embodiment of the present invention.

Throughout the drawings, like reference numbers will be understood to refer to like elements, features and structures.

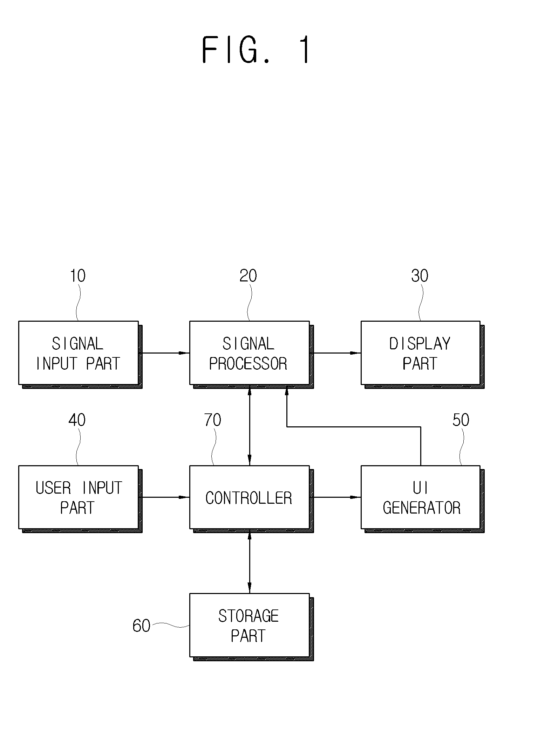

FIG. 1 is a control block diagram of a display apparatus according to an exemplary embodiment of the present invention. As shown therein, a display apparatus according to an exemplary embodiment of the present invention comprises a signal input part 10, a signal processor 20, a display part 30, a user input part 40, a UI generator 50, a storage part 60, and a controller 70.

The signal input part 10 according to an exemplary embodiment of the present invention receives a video signal having additional information corresponding to a video content. The signal input part 10 may comprise a tuner (not shown) which receives a broadcasting signal and an external connection terminal (not shown) which receives a video signal from an external device.

The tuner may be realized as a single or multiple tuners, a demodulator to demodulate a tuned signal, a decoder and a multiplexer. The tuner tunes a broadcasting signal having a frequency bandwidth corresponding to a tuning control signal of the controller 70 (to be described later). The broadcasting signal of the tuned channel preferably comprises a transport stream which is packetized by time-division multiplexing (TDM) a video signal, an audio signal and various data.

For example, the demodulator VSB-demodulates and corrects errors in a digital broadcasting signal to be outputted as a transport stream.

Here, the additional information may be received together with the video signal. For example, the additional information may be placed in a free byte of a program and system information protocol (PSIP) table of the transport stream according to a standard of the digital broadcasting signal. Also, a new type of table having the additional information that is associable with the PSIP table may be transmitted.

Preferably, the external connection terminal may comprise various connectors to receive various formats of video signals. For example, the signal input part 10 may comprise at least one of a D-sub connector, a composite video baseband signal (CVBS) connector, an S-video connector or a component connector to receive a video signal.

The signal processor 20 processes the video signal received from the signal input part 10 according to a control of the controller 70 (to be described later), and displays the video signal on the display part 30.

The signal processor 20 may comprise a decoder (not shown) which decodes the received video signal. The decoder filters the additional information included in the video signal, and supplies the filtered additional information to the controller 70.

Also, the signal processor 20 may comprise additional functions corresponding to a format of the received video signal. For example, the signal processor 20 may perform an analog/digital (A/D) converting function to convert the input video signal of various formats into a digital video signal with a certain format, a scaling function to scale a vertical frequency, resolution, picture ratio according to an output standard of the display part 30 by receiving a digital video signal and/or an analog video signal, and a converting function to convert into a predetermined format.

The display part 30 may be variously realized according to different technologies including digital light processing (DLP), a liquid crystal display (LCD), a plasma display panel (PDP), or any other suitable display technology.

The user input part 40 is provided with a key to select and display a video on the display part 30. The user input part 40 may comprise a remote controller having a channel up/down key and a number key to select a channel, or a menu key provided in a casing. The user input part 40 may comprise a key signal generator to generate a key signal corresponding to a user's manipulation. The user input part 40 may further comprise a function key such as a notice value-displaying key to display a notice value.

The UI generator 50 generates a message to display the notice value according to a control of the controller 70. The message of the UI generator 50 may be realized by an on screen display (OSD) generator. The generated message is synthesized with a video displayed by the signal processor 20.

The notice value is calculated by the controller 70 using the additional information included in the video signal and the video-displaying time. The notice value will be described later.

A storage part 60 stores the video signal having the additional information therein. The storage part 60 is preferably realized as a flash memory or a hard disk.

The controller 70 calculates a notice value corresponding to the video-displaying time based on the additional information, and controls the calculated notice value to be displayed on the display part 30. The controller 70 may be realized as a microcomputer, a CPU, an so on.

More specifically, the controller 70 determines whether the received video signal has additional information when the video signal is received from the signal input part 10.

The additional information included in the video signal comprises information corresponding to the video content. The additional information may be set based on the video-displaying time. For example, when the video content relates to a weight loss program, the additional information comprises a calorie consumption per hour while the video is displayed.

When it is determined that additional information is not included in the video signal, the controller 70 controls the signal processor 20 to process the received video signal to be displayed on the display part 30.

When it is determined that additional information is included in the video signal, the controller 70 controls the signal processor 20 to process the received video signal to be displayed on the display part 30, and counts a time during which the video is displayed on the display part 30. Also, the controller 70 calculates the notice value based on the video-displaying time and the additional information.

When the video content comprises a weight loss program and the additional information comprises calorie consumption per hour, the notice value comprises a number of calories which a user consumes while exercising with the weight loss program. That is, the notice value may be calculated by multiplying the video-displaying time by the calorie consumption per hour.

The controller 70 controls the UI generator 50 to display the notice value calculated according to the additional information and the video-displaying time on the display part 30, when the notice value-displaying key is selected from the user input part 40. The video-displaying time preferably comprises a time from when the video signal having the additional information is displayed on the display part 30 to when the notice value-displaying key is selected from the user input part 40.

The controller 70 preferably causes the calculated notice value to be displayed on the display part 30 when the channel up/down key is selected from the user input part 40 and changes the channel while the video signal having the additional information is displayed.

The video-displaying time preferably comprises a time from when the video signal having the additional information is displayed on the display part 30 to when the channel up/down key is selected from the user input part 40. The calculated notice value is synthesized with the video signal corresponding to the changed channel and displayed on the display part 30. The notice value displayed on the display part 30 may be removed after a predetermined time.

For example, a channel 7 provides a weight loss program having a calorie consumption per hour (such as, 0.1Kcal/sec) as the additional information, and a channel 8 provides a drama having no additional information. When a user selects the channel 8, the controller 70 performs a general process to display the video signal on the display part 30 as the video signal corresponding to the channel 8 does not include the additional information.

When channel 7 is selected at 07:45 through the channel up/down key of the user input part 40, the controller 70 supplies the tuning control signal to the signal input part 10 and changes the channel into the channel 7. Since the weight loss program provided in the channel 7 comprises a video signal having additional information, the controller 70 counts the video-displaying time and calculates the notice value.

When channel 8 is selected at 07:55 through the user input part 40, the controller 70 changes the channel into channel 8. The controller 70 displays the notice value calculated according to the weight loss program-displaying time and the additional information, that is, a message informing "600sec * 0.1Kcal/sec = 60Kcal" after being synthesized with the video signal corresponding to channel 8.

The controller 70 preferably also periodically displays the calculated notice value or continuously displays the calculated notice value when the video having the additional information is displayed.

When a video signal having additional information is required through the signal input part 10, the controller 70 preferably stores the inputted video signal in the storage part 60. When a video signal having additional information stored in the storage part 60 is selected to be displayed, the controller 70 displays the video. The controller 70 preferably calculates the notice value according to the additional information and the video-displaying time.

The controller 70 may collect time information on the video-displaying times for a predetermined period and calculate a periodic notice value. The controller 70 preferably controls the calculated periodic notice value to be displayed by period as at least one of monthly, weekly or daily notice values.

For example, a user can view an aerobic program for a week. The controller 70 collects information on the video-displaying time for a week, and displays a calorie consumed while a user views the aerobic program for a week, preferably as a graph. Thus, a user may easily recognize how many calories are consumed each day while viewing the aerobic program for a week.

Hereinafter, a display apparatus according to a second exemplary embodiment of the present invention will be described.

A storage part 60 of the display apparatus according to the second exemplary embodiment of the present invention stores a video signal having additional information. The video signal stored in the storage part 60 is received from an external device such as a DVD player or a VCR, through a signal input part 10. The video signal stored in the storage part 60 may be updated through an interface such as a USB port.

When a video signal having additional information stored in the storage part 60 is selected through a user input part 40 to be displayed, a controller 70 controls to display the selected video on a display part 30. The controller 70 calculates a notice value based on the video-displaying time and the additional information, and controls a UI generator 50 to display the calculated notice value.

As described above, when the display of video is stopped or a user requests the notice value, the controller 70 calculates the notice value to be displayed. The notice value may be periodically or continuously displayed while the video is displayed.

When viewing a video having additional information corresponding to the video content, a user may receive predetermined information resulted from the additional information and the video-displaying time. That is, when the video content relates to weight loss or exercise, a user may check calories consumed while viewing the video.

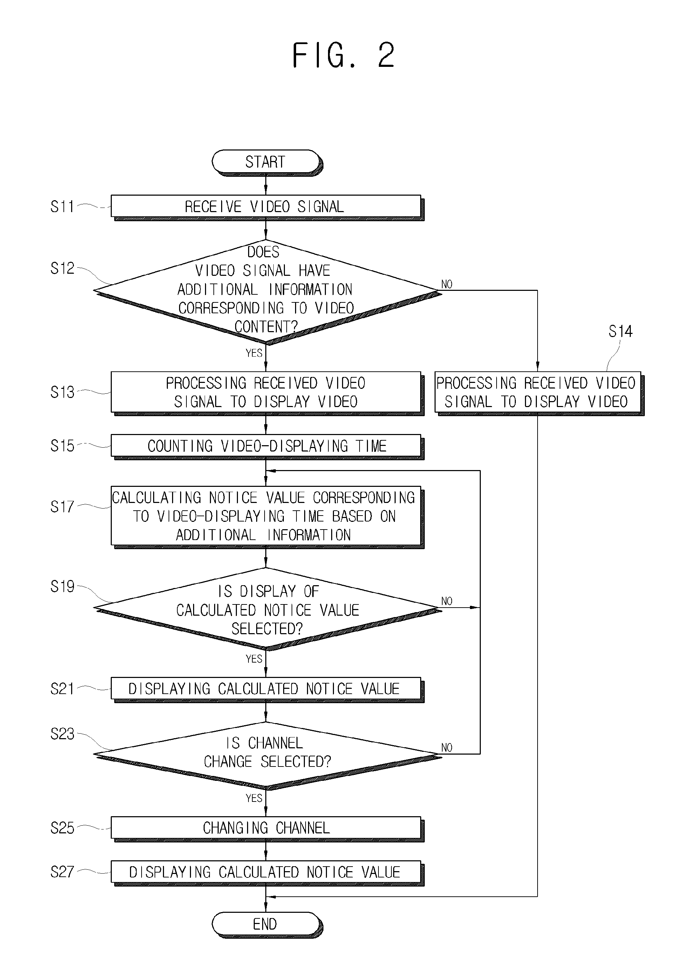

A control method of the display apparatus according to the first embodiment of the present invention will be described with reference to FIG. 2. The calculated notice value is displayed upon request of a user, as an example of the present invention.

As shown in FIG. 2, when the video signal is received through the signal input part 10 (S11), the controller 70 determines whether the received video signal has the additional information corresponding to the video content (S12).

If it is determined that additional information is not included in the inputted video signal, the controller 70 displays the video signal on the display part 30 after performing the general process (S14).

If it is determined that additional information is included in the received video signal, the controller 70 controls the received video signal to be processed and displayed on the display part 30 (S13), and counts the video-displaying time (S15).

The controller 70 calculates the notice value corresponding to the video-displaying time based on the additional information (S17).

When the notice value-displaying key is selected from the user input part 40 (S19), the controller 70 controls the calculated notice value to be displayed on the display part 30 (S21). As described above, the notice value is calculated by multiplying the additional information by the time from when the video is displayed on the display part 30 to when the notice value-displaying key is selected.

If a channel change is selected through the user input part 40 (S23), the channel is changed (S25). If a channel change is not selected, the method returns to step S17.

Next, the calculated notice value is synthesized with the video signal corresponding to the changed channel and displayed on the display part 30 (S27).

Thus, a user may receive the result from viewing the video having the additional information, through the additional information included in the video signal.

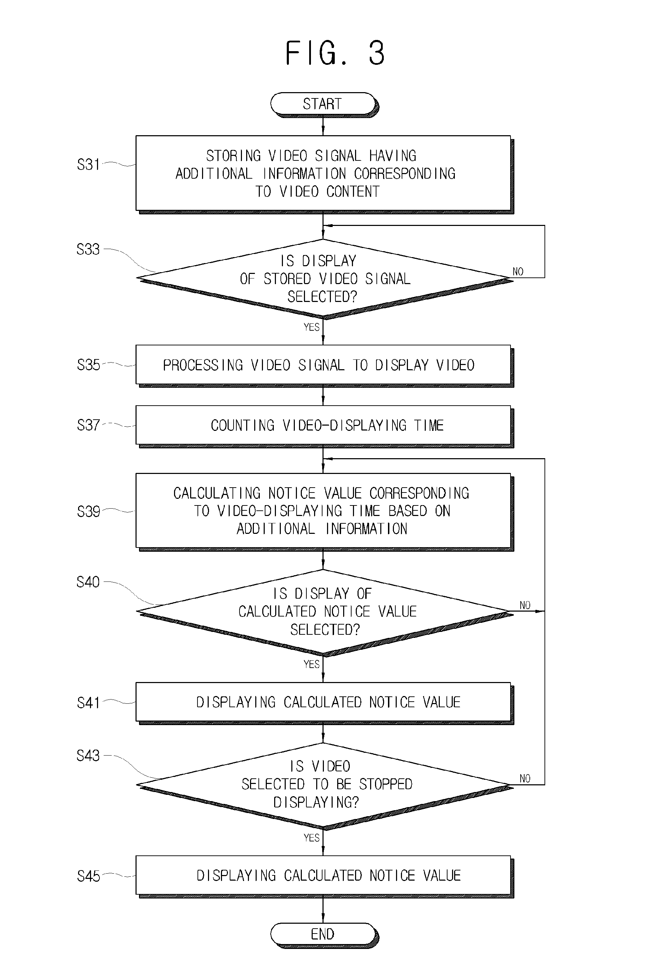

A control method of the display apparatus according to the second exemplary embodiment of the present invention will be described with reference to FIG. 3.

As shown in FIG. 3, the video signal having the additional information corresponding to the video content is stored in the storage part 60 (S31).

When the video signal stored in the storage part 60 is selected through the user input part 40 to be displayed (S33), the controller 70 controls the selected video signal to be processed as the video and displayed on the display part 30 (S35).

The controller 70 counts the video-displaying time (S37), and calculates the notice value corresponding to the video-displaying time based on the additional information (S39).

When the notice value-displaying key is selected through the user input part 40 (S40), the controller 70 controls the UI generator 50 to display the calculated notice value on the display part 30 as a message (S41).

When a video signal having additional information is selected to stop viewing through the user input part 40 (S43), the controller 70 controls the calculated notice value to be displayed after the display of video is stopped (S45).

Thus, a user may receive the result from viewing the video having the additional information corresponding to the content of the video.

In the foregoing exemplary embodiments, the display apparatus calculates and displays the consumed calories, but the invention is not limited thereto. For example, the display apparatus according to another embodiment of the present invention may calculate the amount of produced endorphin when the video comprises a comedy. Here, the additional information comprises the amount of endorphin per hour.

The additional information preferably comprises a predetermined value per hour, that is, an average value per hour, but is not limited thereto. Alternatively, the additional information may vary by differently calculating average values according to time of the video signal.

In the foregoing exemplary embodiments, the display apparatus receives a video signal having additional information and displays the video signal, but is not limited thereto. Alternatively, a signal processing apparatus may be additionally provided to receive the video signal. For example, a set-top box which is connected with the display apparatus may receive the video signal having the additional information. When a user selects the video to be displayed, the video may be displayed on the display apparatus. The notice value may be calculated by using the additional information and the video-displaying time, and displayed on the display apparatus.

As described above, exemplary embodiments of the present invention provide a display apparatus which provides predetermined information according to additional information and video-displaying time when a user views a video having additional information corresponding to a video content, and a control method of a display apparatus and a signal processing apparatus using the same.

Also, exemplary embodiments of the present invention provide a display apparatus which provides a user with a result from viewing a video when a user views a video signal having additional information corresponding to a video content, a control method of a display apparatus and a signal processing apparatus using the same.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a signal processor (20) which processes a video signal having additional information corresponding to a video content;
a display part (30) which displays a video of the video signal processed by the signal processor; and
a controller (70) which calculates a notice value corresponding to a video-displaying time based on the additional information, and displays the calculated notice value on the display part.

2. The display apparatus according to claim 1, further comprising:
a storage part (60) which stores the video signal, wherein
the controller (70) stores the received video signal in the storage part when the video signal having additional information corresponding to the video content is received.

3. The display apparatus according to claim 1 or claim 2, wherein the video content comprises an exercise video, and the additional information comprises a calorie consumption per unit hour.

4. The display apparatus according to claim 3, wherein the controller (70) calculates the notice value by multiplying the video-displaying time by the calorie consumption per unit hour.

5. The display apparatus according to any preceding claim, wherein the controller (70) calculates the notice value corresponding to a time from when the video is selected to be displayed to when the video is selected to be stopped displaying.

6. The display apparatus according to any preceding claim, wherein the controller (70) collects time information on the video-displaying times for a predetermined period, and calculates a periodic notice value based on the collected time information.

7. The display apparatus according to claim 6, wherein the controller (70) displays the calculated notice value by period as at least one of monthly, weekly and daily notice values.

8. A method of controlling a display apparatus, comprising:
processing a video signal having additional information corresponding to a video content and displaying a video;
calculating a notice value corresponding to a video displaying time based on the additional information; and
displaying the calculated notice value on a display part.

9. The method according to claim 8, further comprising:
storing the received video signal when a video signal having additional information corresponding to the video content is received.

10. The method according to claim 8 or claim 9, wherein the video content comprises an exercise video, and the additional information comprises a calorie consumption per unit hour.

11. The method according to claim 10, wherein calculating the notice value comprises calculating the notice value by multiplying the video-displaying time by the calorie consumption per unit hour.

12. The method according to any one of claims 8 - 11, wherein the notice value is calculated corresponding to a time from when the video is selected to be displayed to when the video is selected to be stopped displaying.

13. The method according to any one of claims 8 - 12, further comprising:
collecting time information on the video-displaying times for a predetermined period; and
calculating a periodic notice value based on the collected time information.

14. The method according to claim 13, wherein the calculated periodic notice value is displayed by period as at least one of monthly, weekly and daily notice values.

15. A signal processing apparatus, comprising:
a signal processor which processes a video signal having additional information corresponding to a video content; and
a controller which calculates a notice value corresponding to a video-displaying time based on the additional information, and displays the calculated notice value on a predetermined display apparatus.

16. The signal processing apparatus according to claim 15, further comprising:
a storage part which stores a video signal therein, wherein
the controller stores the received video signal in the storage part when the video signal having the additional information corresponding to the video content is received.

17. The signal processing apparatus according to claim 15, wherein the video content comprises an exercise video, and the additional information comprises a calorie consumption per unit hour.

18. The signal processing apparatus according to claim 17, wherein the controller calculates the notice value by multiplying the video-displaying time by the calorie consumption per unit hour.

19. The signal processing apparatus according to claim 15, wherein the controller calculates the notice value corresponding to a time from when the video is selected to be displayed to when the video is selected to be stopped displaying.

20. The signal processing apparatus according to claim 15, wherein the controller collects time information on the video-displaying times for a predetermined period, and calculates a periodic notice value based on the collected time information.

21. The signal processing apparatus according to claim 20, wherein the controller displays the calculated notice value by period as at least one of monthly, weekly and daily notice values.
